# EUROPEAN PATENT APPLICATION

(11) **EP 4 494 775 A1**
(43) Date of publication of application: **22.01.2025**
(21) Application number: 24188047.5
(22) Date of filing: 11.07.2024
(51) Int. Cl.: B21D 39/03, E03D 11/14, F16B 17/00

(54) **INSTALLATION STRUCTURE FOR SANITARY FIXTURES AND MANUFACTURING METHOD THEREOF**

(30) Priority: 17.07.2023 IT 202300014928
(71) Applicant: OLI - SISTEMAS SANITARIOS, S.A., 3800-314 Aveiro (PT)
(72) Inventor: DE MATOS PEREIRA, Tiago Renato, 3800-314 Aveiro (PT); DE OLIVEIRA COQUIM, Calisto, 3800-314 Aveiro (PT)
(74) Representative: Studio Torta S.p.A.

(57) **Abstract**

An installation structure (1) for sanitary fixtures comprises a frame (2) having a pair of struts (3) parallel to each other and one or more crossbars (4) arranged between the struts (3); the crossbars (4) are joined to the struts (3) by clinching joints (17) that join respective flat coupling portions (11, 13) of a strut (3) and a crossbar (4) .

## Description

### CROSS-REFERENCE TO RELATED APPLICATIONS

This patent application claims priority from Italian patent application no. 102023000014928 filed on July 17, 2023, the entire disclosure of which is incorporated herein by reference.

### TECHNICAL FIELD

This invention relates to an installation structure for sanitary fixtures and a manufacturing method thereof.

### BACKGROUND

The installation structures for sanitary fixtures, especially built-in ones, generally comprise a metal frame on which various structural elements and functional components are fixed, as well as the anchors for fastening the frame to the floor and/or to a support wall.

The frame normally comprises a pair of vertical struts provided with support feet that rest on the floor, and horizontal crossbars between the struts.

In general, the crossbars are joined to the struts using welding.

The welding process is a relatively expensive one, especially in terms of energy, but also slow and polluting; in addition, welding often causes tension in welded materials and, as a result, deformations that may mean the structures do not comply with the project specifications.

In addition, the application of finishes, for example protective treatments like paint or zinc coating, etc., needed to provide the structure with suitable resistance to humidity or corrosion, etc. must occur after having assembled the complete frame, so as not to ruin the coating with the welding operations.

### SUMMARY

One purpose of this invention is to provide an installation structure for sanitary fixtures and a method for its manufacture that are free of the drawbacks highlighted by the prior art; in particular, one purpose of the invention is to provide an installation structure for sanitary fixtures in which the struts and the crossbars are very simply, effectively, and cost-effectively joined, avoiding the occurrence of tensions and deformations.

This invention thus relates to an installation structure for sanitary fixtures and a manufacture method thereof as defined in the attached claims 1 and, respectively, 8.

Further preferred characteristics of the invention are indicated in the dependent claims.

In summary, in the installation structure in accordance with the invention, the crossbars are joined to the struts via clinching, i.e. via plastic deformation (even cold) of the two parts to be joined, without using welding or rivets.

In the clinching, the two parts to be joined are compressed with a pre-determined thrust force, thanks to the interaction between a punch and a die, without the addition of any filler material or assembly components. The two parts are plastically deformed, forming a shape coupling, in which the two metallic components to join are pressed so that a locking fold is formed between them.

Basically, the two layers to be joined are punched, creating not just a hollow, but a collar that will keep both layers joined. To this end, a clinching tool is used that has a punch and a die cooperating so that they can enable a slight dilation of the first layer into the second.

In general, the clinching process is a cold one, although it is also possible to slightly heat the punch and die to encourage a plastic effect during contact between the two layers to be joined.

This method is faster, cleaner, and more cost-effective than welding.

The invention thus makes it possible to reduce assembly time and costs for the structure, and to eliminate the tensions accumulated in the materials in order to reduce non-compliance.

In addition, any finishes, for example to give the structure suitable resistance to humidity, corrosion, etc., such as painting or zinc coating, etc., may be carried out on the individual components (crossbars and struts) before assembling the frame. It is not, therefore, necessary, as in the case of welding, to create the complete frame, assembling crossbars and struts, and then carry out the finishes.

### BRIEF DESCRIPTION OF THE DRAWINGS

Additional features and advantages of this invention will be clear from the description that follows of a nonlimiting embodiment, with reference to the attached figures, in which:
- Figure 1 is a front perspective view of an installation structure for sanitary fixtures in accordance with a first embodiment of the invention;
- Figures 2, 3 and 4 are perspective views of respective components of the installation structure in Figure 1;
- Figure 5 is a front perspective view of an installation structure for sanitary fixtures in accordance with a second embodiment of the invention;
- Figure 6 is a perspective view in cross section of a common detail of the installation structure in Figure 1 and of the installation structure in Figure 5;
- Figure 7 schematically illustrates some steps of the manufacture method of the installation structure of the invention.

### DESCRIPTION OF EMBODIMENTS

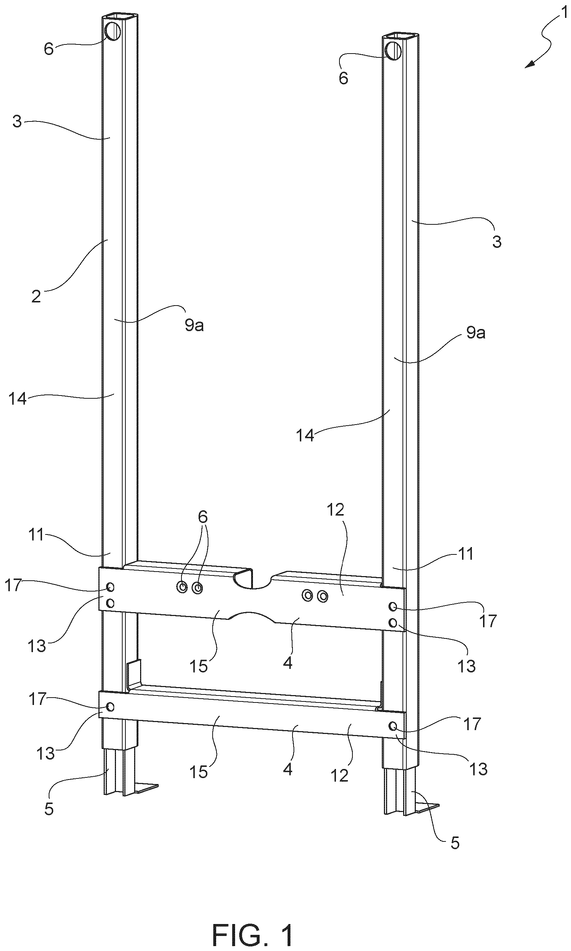

With reference to Figure 1, an installation structure 1 for sanitary fixtures (toilets, urinals, sinks, bidets, etc.), in particular a built-in installation structure (intended, i.e. to be built into a wall), comprises a frame 2 that has a pair of struts 3 parallel to each other and one or more crossbars 4 arranged between the struts 3.

The struts 3 are equipped with respective feet 5, which may be telescopic and/or rotatable; the struts 3 and/or the crossbars 4 have openings, holes, or other connection elements 6 intended to anchor them to the wall, to fasten functional components, to insert supports and related blocking elements for the sanitary fixtures, etc.

The struts 3 and the crossbars 4 are made of metal, for example steel.

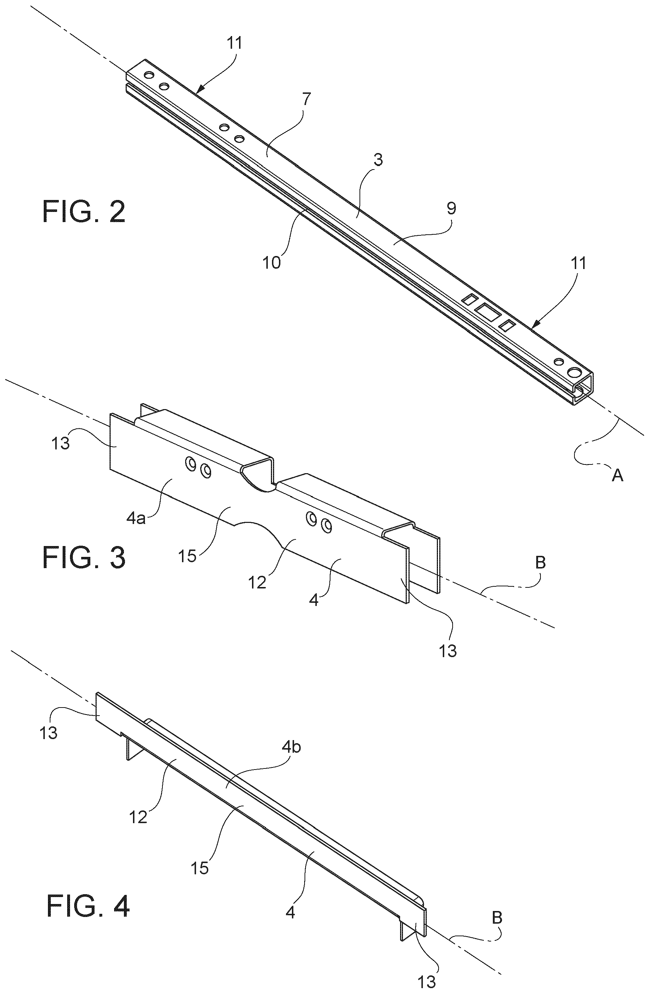

With reference to Figure 2 as well, each strut 3 has a hollow body 7 extended longitudinally along a longitudinal axis A and has a polygonal cross section, in particular a square one.

The body 7 has an inner cavity 8 delimited by lateral walls 9 arranged around the axis A. In the example illustrated, the body 7 has four lateral walls 9 orthogonal to each other. Optionally, one of the lateral walls 9 has a longitudinal slot 10 communicating with the cavity 8 and extending along the whole body 7.

The lateral walls 9 are flat or comprise flat coupling portions 11 (i.e. that have two opposite, flat and parallel faces) intended to couple with the crossbars 4.

Advantageously, the body 7 is obtained from a metallic sheet folded to form the lateral walls 9.

With reference to Figures 3 and 4 as well, the crossbars 4 may be variously shaped. Generally, each crossbar 4 consists of a solid or hollow metal bar 12, extended along an axis B.

In the example illustrated, a first crossbar 4a (Figure 3), in particular the main crossbar intended to support a toilet, consists of a metal bar 12 with a basically U-shaped cross section, which has a pair of parallel walls joined by a connecting wall. A second crossbar 4b (Figure 4) consists of a metal bar 12 equipped with transverse supports or ribs.

In any case, each crossbar 4 has a pair of flat coupling portions 13 (with two opposite, flat and parallel faces) placed at respective opposite, longitudinal ends of the crossbar 4 and intended to be coupled to respective coupling portions 11 of the struts 3, in particular on respective flat faces 14 of respective lateral walls 9 of the struts 3.

In the embodiment in Figure 1, each crossbar has front coupling portions 13, which project from a front (and/or rear) wall 15 of the bar 12 and are basically parallel to it, so as to overlap the respective faces 14 of respective front lateral walls 9a (facing, in use, the room in which the sanitary fixtures are installed) of the struts 3.

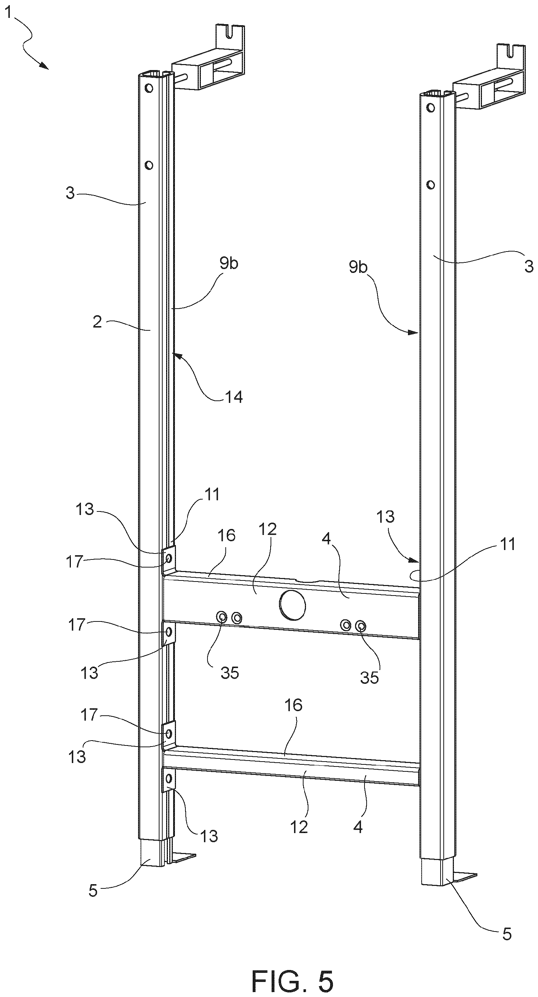

In the variant of Figure 5 too, the installation structure 1 comprises a frame 2 that has a pair of struts 3 parallel to each other and one or more crossbars 4 arranged between the struts 3, made of metal, for example steel.

The crossbars 4 are similar to those already described above and, thus, comprise, in particular, flat coupling portions 13 (that have two opposite, flat and parallel faces), placed at respective opposite, longitudinal ends of the crossbar 4 and intended to be coupled to respective coupling portions 11 of the struts 3.

In the embodiment in Figure 5, the coupling portions 13 are lateral coupling portions, which project from an upper (and/or lower) wall 16 of the bar 12 and are basically perpendicular to it, so as to overlap with respective coupling portions 11 of the struts 3 that are arranged on respective faces 14 of respective lateral walls 9 of the struts 3, precisely of respective internal, lateral walls 9b, facing each other, of the struts 3.

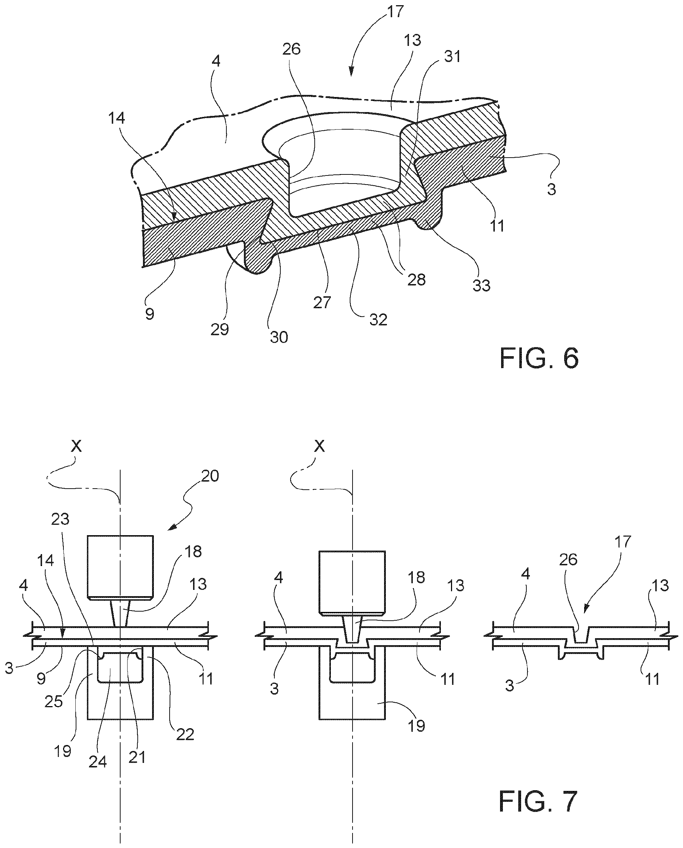

In all cases, the crossbars 4 are joined to the struts 3 via clinching joints 17, one of which is shown, in particular, in Figure 6.

With reference to Figure 7 as well, to fix a crossbar 4 to the struts 3, the crossbar 4 is arranged between the struts 3 with the coupling portions 13 resting on the face 14 of respective lateral walls 9 of the struts 3 and overlapping respective coupling portions 11 of the struts 3.

A clinching step, thus, follows, in which each coupling portion 13 of the crossbar 4 and the respective coupling portion 11 of the strut 3, overlapping and in contact with the other, are pressed against each other using a punch 18 and a die 19 of a clinching tool 20, causing the plastic deformation of the coupling portions 11, 13 to form the clinching joint 17.

More specifically, a coupling portion 11 of a strut 3 and a coupling portion 13 of a crossbar 4 overlap each other and rest on the die 19 of the clinching tool 20.

The die 19 has a hollow seat 21 delimited by a lateral wall 22 that has a front edge 23, for example circular, and on one bottom wall 24 provided with a peripheral annular channel 25.

The punch 18 has a basically cylindrical or truncated-cone shape with a smaller cross section than the seat 21 of the die 19.

It remains understood that different clinching tools can be used, which have different dies and punches than those described here merely by way of example.

The punch 18 and the die 19 are aligned along an operation axis X and are moved closer to each other along the operation axis X causing plastic deformation of the coupling portions 11, 13 arranged therein between to form the clinching joint 17.

Both the coupling portions 11, 13 joined to each other are deformed so as to form a blind recess 26, delimited by a double wall 27 formed by respective layers 28 of the coupling portions 11, 13 and diverging outward to define a shape coupling 29 which locks the two coupling portions 11, 13 to each other.

In particular, the double wall 27 has a radially outer peripheral edge 30 which widens radially outward, defining the shape coupling 29.

The recess 26 is a blind recess and the double wall 27 that delimits it comprises a lateral portion 31 and a bottom portion 32.

The clinching joint 17 projects axially beyond a surface of the coupling portion 11, where it has a cylindrical collar 33 formed in the channel 25.

The clinching operation is repeated on all the coupling portions 11, 13 to form respective clinching joints 17 where necessary to fix the crossbars 4 to the struts 3.

It is clear that the embodiments described above, as additional variants too, can be combined together; in particular, the crossbars 4 can be provided with both frontal and lateral coupling portions 13.

The main crossbar 4a is preferably provided with riveted nuts 35: normally, the main crossbar of an installation structure for sanitary fixtures is equipped with threaded holes (and the threading is, thus, formed directly on the wall of the crossbar), on which respective fastening screws of the toilet are engaged; in this case, instead of directly threading the wall of the crossbar, the wall of the crossbar is simply drilled and an internally threaded nut is inserted in the hole. The nut is then riveted so as to remain firmly hooked to the crossbar. The nut, initially provided with a head at just one end, is inserted in the hole and, thus, the end without the head is riveted, i.e. plastically deformed to form a counterhead.

Lastly, it is clear that modifications and changes may be made to the installation structure for sanitary fixtures and to the manufacturing method thereof described and illustrated herein without departing from the scope of the attached claims.

## Claims

1. An installation structure (1) for sanitary fixtures, comprising a frame (2) having a pair of struts (3) parallel to each other and one or more crossbars (4) arranged between the struts (3); **characterized in that** the crossbars (4) are joined to the struts (3) by clinching joints (17) which join respective flat coupling portions (11, 13) of a strut (3) and a crossbar (4).

2. The installation structure according to claim 1, wherein each clinching joint (17) comprises a blind recess (26), delimited by a double wall (27) made up of respective layers (28) of the coupling portions (11, 13) and diverging outward to define a shape coupling (29) which blocks the two coupling portions (11, 13) to each other.

3. The installation structure according to claim 2, wherein the double wall (27) has a radially outer peripheral edge (30) which widens radially outward and defines the shape coupling (29).

4. The installation structure according to claim 2 or 3, wherein the recess (26) is a blind recess and the double wall (27) that delimits the recess (26) comprises a lateral portion (31) and a bottom portion (32).

5. The installation structure according to one of the preceding claims, wherein each crossbar (4) has a pair of flat coupling portions (13), positioned at respective opposite longitudinal ends of the crossbar (4) and protruding longitudinally or transversally to overlap respective flat coupling portions (11) of the struts (3).

6. The installation structure according to one of the preceding claims, wherein at least on crossbar (4) has front coupling portions (13), which project from a front and/or rear wall (15) of the crossbar (4) and are substantially parallel thereto, so as to overlap respective faces (14) of respective front lateral walls (9a) of the struts (3).

7. The installation structure according to one of the preceding claims, wherein at least one crossbar (4) has lateral coupling portions (13), which project from an upper and/or lower wall (16) of the crossbar (4) and are substantially perpendicular thereto, so as to overlap respective faces (14) of respective inner lateral walls (9b), facing to each other, of the struts (3).

8. A method for manufacturing an installation structure (1) for sanitary fixtures, comprising the steps of: providing a pair of struts (3) and one or more crossbars (4); assembling the struts (3) and the crossbars (4) to form a frame (2) having a pair of struts (3) parallel to each other and one or more crossbars (4) arranged between the struts (3); the struts (3) and the crossbars (4) being provided with respective flat coupling portions (11, 13); **characterized by** comprising a clinching step, in which the crossbars (4) are joined to the struts (3) by clinching joints (17) which join respective flat coupling portions (11, 13) of a strut (3) and a crossbar (4).

9. The method according to claim 8, wherein the clinching step comprises the steps of: positioning a crossbar (4) between the struts (3) with the coupling portions (13) of the crossbar (4) overlapping respective coupling portions (11) of the struts (3); pressing each coupling portion (13) of the crossbar (4) and the respective coupling portion (11) of the strut (3), overlapping and in contact with each other, one against the other by means of a punch (18) and a die (19) of a clinching tool (20), causing plastic deformation of the coupling portions (11, 13) to form the clinching joint (17) .

10. The method according to claim 9, wherein the die (19) has a hollow seat (21) delimited by a lateral wall (22), having a front edge (23), for example circular, and by a bottom wall (24) provided with a peripheral annular channel (25); and the punch (18) has a substantially cylindrical or truncated-cone shape and a cross section smaller than the seat (21) of the die (19).

11. The method according to claim 9 or 10, wherein the punch (18) and the die (19) are aligned along an operation axis (X) and are moved closer to each other along said operation axis (X) causing plastic deformation of the coupling portions (11, 13) arranged therein between to form the clinching joint (17).

12. The method according to one of claims 8 to 11, wherein in the clinching step both coupling portions (11, 13) joined to each other are deformed so as to form a blind recess (26), delimited by a double wall (27) formed by respective layers (28) of the coupling portions (11, 13) and diverging outward to define a shape coupling (29) which blocks the two coupling portions (11, 13) to each other.

13. The method according to claim 12, wherein the double wall (27) has a radially outer peripheral edge (30) which widens radially outward and defines the shape coupling (29) .

14. The method according to claim 12 or 13, wherein the recess (26) is a blind recess and the double wall (27) that delimits the recess (26) comprises a lateral portion (31) and a bottom portion (32).
